# EUROPÄISCHE PATENTSCHRIFT

(11) **EP 2 017 021 B1**
(45) Veröffentlichungstag und Bekanntmachung des Hinweises auf die Patenterteilung: **14.11.2012**
(21) Anmeldenummer: 08012450.6
(22) Anmeldetag: 10.07.2008
(51) Int. Cl.: B21D 53/02, B23P 15/26, F28F 9/18, F28D 1/053

(54) **Verfahren zur Herstellung von Öffnungen in einem Bodenteil sowie Bodenteil, herstellbar nach dem Verfahren**
Method for creating openings in a base part and base part produced by the method
Procédé de fabrication d'ouvertures dans un élément de sol et élément de sol pouvant être fabriqué selon ce procédé

(30) Priorität: 19.07.2007 DE 102007033976
(43) Veröffentlichungstag der Anmeldung: 21.01.2009
(73) Patentinhaber: Behr GmbH & Co. KG, 70469 Stuttgart (DE)
(72) Erfinder: Liedtke, Oliver, 76135 Karlsruhe (DE); Bensel, Thomas, 71254 Ditzingen (DE); Bröder, Haymo, 71229 Leonberg (DE)
(74) Vertreter: Grauel, Andreas

(56) Entgegenhaltungen:
- EP-A- 1 775 540
- DE-A1- 2 902 155
- DE-A1- 19 603 016
- DE-A1-102005 058 177
- US-A1- 2002 139 521
- US-B1- 6 446 337

## Beschreibung

Die Erfindung betrifft ein Verfahren zur Herstellung von Öffnungen in einem Bodenteil nach dem Oberbegriff des Patentanspruches 1, ein Bodenteil eines Sammelkastens nach dem Oberbegriff des Patentanspruches 3 sowie einen Wärmeübertrager nach dem Oberbegriff des Patentanspruches 10.

Es ist bekannt, Rohre für Wärmeübertrager, insbesondere auch Flachrohre in so genannten Durchzügen, welche in Rohrböden von Sammelkästen angeordnet sind, aufzunehmen. Zur Herstellung einer festen und dichten Verbindung werden die Rohrenden stoffschlüssig, insbesondere durch Löten mit den Durchzügen verbunden. Die Güte der Lötverbindung hängt u. a. von dem während des Lötprozesses bestehenden Lötspalt und dem Lotangebot an der Lötstelle ab. Bei lotplattierten Rohrböden kann das Verfahren zur Herstellung der Durchzüge das Lotangebot positiv oder negativ beeinflussen: bei vorgestanzten Durchzügen ist das Lotangebot ungünstiger als bei so genannten gerissenen Durchzügen, welche durch Aufreißen des Bodenmaterials mit einem Reißwerkzeug hergestellt werden.

Durch die DE 41 29 573 C2 der Anmelderin wurde ein Wärmeübertrager für Flachrohre mit gerissenen Durchzügen, welche eine flachovale Form aufweisen, bekannt. Beim Reißen der Durchzüge erfolgt also keine Lochstanzung mit Materialabfall, sondern ein Aufreißen des Bodens mittels eines entsprechend geformten Schneidstempels. Durch diesen Reißvorgang ergeben sich bei lotplattiertern Rohrboden Durchzüge mit lotplattierten Abrisskanten, wodurch eine gute Lotbenetzung und damit eine fluiddichte Lötverbindung erzielt werden. Die bekannten gerissenen Durchzüge weisen - ebenso wie die Flachrohre - glatte Flachseiten auf.

Durch die gattungsgemäße DE 10 2005 058 177 A1 der Anmelderin wurde ein Verfahren zur Herstellung von Öffnungen in einem Rohrboden eines Wärmeübertragers bekannt, wobei die Öffnungen der Aufnahme von Flachrohren mit Längssicken, so genannten Sickenrohren, dienen und daher verengte Mittelbereiche aufweisen. Die Kontur der Öffnungen zur Aufnahme der Sickenrohre wird durch zwei unterschiedliche Formgebungsverfahren, nämlich einerseits Stanzen und andererseits Reißen hergestellt. Dabei werden die flachovalen Öffnungen durch Reißen und die verengten Mittelbereiche durch Stanzen hergestellt. Somit ergibt sich für die außen liegenden, flachovalen Öffnungen zumindest auf deren Flachseiten ein hochgestellter Kragen, während ein solcher Kragen in den verengten Mittelbereichen fehlt. Insofern ist die Lotbenetzung bei dem bekannten Verfahren unterschiedlich.

Es ist Aufgabe der vorliegenden Erfindung, ein Verfahren der eingangs genannten Art weiter zu verbessern, insbesondere im Hinblick auf ein verbessertes Lotangebot und eine verbesserte Lötverbindung zwischen Öffnung und Flachrohr. Es ist auch Aufgabe der Erfindung, ein Bodenteil der eingangs genannten Art durch ein geeignetes Verfahren derart zu gestalten, dass eine feste und dichte Lötverbindung erzielt wird. Ferner ist es Aufgabe der Erfindung, einen Wärmeübertrager zu schaffen, welcher kostengünstig herstellbar ist.

Die Aufgabe der Erfindung wird zunächst durch die Merkmale des Patentanspruches 1 gelöst, wobei sich eine vorteilhafte Ausgestaltung aus dem Unteranspruch 2 ergibt. Erfindungsgemäß werden die Öffnungen zur Aufnahme der Sicken aufweisenden Flachrohre durch Reißen ohne Stanzen hergestellt, wobei unter Reißen das eingangs im Zusammenhang mit der Würdigung des Standes der Technik erläuterte Verfahren zu verstehen ist. Hierbei erfolgt also kein Stanzen des Materials, sodass auch kein Materialabfall durch Ausstanzen erzeugt wird. Ein Stempel mit einer Schneidkante, welche gerade oder gebogen ausgebildet sein kann, dringt in das Material ein und reißt einen Schlitz auf, welcher anschließend durch einen entsprechend geformten Schaft des Stempels in die gewünschte Form, d. h. entsprechend der Kontur des Sickenrohres geformt wird. Bei diesem Reißvorgang wird das Material, welches vorzugsweise auf einer Matrize aufliegt, abgestreckt, sodass Kragen entstehen, welche eine umlaufende Anlagefläche bilden. Wie aus der Würdigung des o. g. Standes der Technik bekannt, wird mit dem Reißen beim Einsatz eines lotplattierten Bodens bzw. Bodenteiles ein besseres-Lotangebot erzielt. Dieses verbesserte Lotangebot ist nicht nur auf den flachen Seiten der Kragen vorhanden, sondern auch in den verengten Bereichen, in welchen die Sickenbereiche des Flachrohres aufgenommen werden. Damit wird der Vorteil einer verbesserten Verlötung im Sickenbereich der Flachrohre erzielt. Dies gilt für eine oder mehrere Längssicken im Flachrohr, also bei Zwei- und Mehrkammerflachrohren, wobei die Kammern jeweils durch Längssicken voneinander getrennt sind. Vorzugsweise sind die Sicken nach innen in das Rohr eingeprägt, möglich sind jedoch auch Sicken, die aus der Kontur des Flachrohres nach außen geprägt sind.

Die Aufgabe der Erfindung wird auch durch die Merkmale des Patentsanspruches 3 gelöst, wobei sich vorteilhafte Ausgestaltungen aus den Unteransprüchen 4 bis 9 ergeben. Erfindungsgemäß sind die Öffnungen im Bodenteil, welches nach dem o. g. Verfahren hergestellt ist, infolge der Materialabstreckung als Durchzüge ausgebildet, sodass ein umlaufender Kragen bzw. eine Art Manschette gebildet wird, welche sich an die in die Durchzüge einzuführenden Flachrohre anlegt. Insbesondere ist eine derartige Anlage zwischen Durchzug und Flachrohr auch im Bereich der Längssicken gegeben, sodass dort ein hinreichendes Lotangebot, verbunden mit einer hohen Lötqualität erreicht wird.

Bevorzugt besteht das Bodenteil aus einem Iotplattierten Werkstoff, insbesondere einer Iotplattierten Aluminiumlegierung. Durch das Reißen der Durchzüge und die Abstreckung des Materials geht keine Lotplattierung verloren, sodass diese im Lötprozess zur Verfügung steht und eine gute Lotbenetzung ergibt.

Nach einem bevorzugten Ausführungsbeispiel weist der Kragen bzw. die Absteckung eine Höhe auf, die zwischen 70 und 90%, vorzugsweise bei 80% der Bodenwandstärke des Bodenteils liegt.

Nach einer weiteren bevorzugten Ausführungsform weist das Bodenteil einen etwa U-förmigen Querschnitt auf und ist vorzugsweise in seinem Mittelteil gewölbt ausgebildet, sodass sich eine höhere Innendruckfestigkeit ergibt. Die Durchzüge sind in dem gewölbten Mittelteil angeordnet und erstrecken sich in das Innere des Sammelkastens. Dadurch ergibt sich über den Umfang der Durchzüge auf der Außenseite der Wölbung eine Schräge, die einerseits das Einführen der Flachrohre erleichtert und andererseits eine gute Lotbenetzung sicherstellt.

Nach einer weiteren bevorzugten Ausführungsform weisen die Sicken der Flachrohre einen etwa trapezförmigen Querschnitt auf - entsprechend sind die verengten Bereiche der Durchzüge ausgebildet. Diese Form ist nach dem erfindungsgemäßen Verfahren günstig herstellbar, obwohl auch andere Sickenformen, z. B. gerundet möglich sind.

Die Aufgabe der Erfindung wird auch durch einen Wärmeübertrager mit den Merkmalen des Patentanspruches 10 gelöst. Erfindungsgemäß sind das Bodenteil des Wärmeübertragers bzw. die im Bodenteil angeordneten Durchzüge entsprechend den vorherigen Ansprüchen ausgebildet.

Nach einer bevorzugten Ausführungsform ist der Wärmeübertrager als gelöteter Ganzaluminiumwärmeübertrager ausgebildet. Das erfindungsgemäße Verfahren zur Herstellung der Durchzüge und die erfindungsgemäß ausgebildeten Durchzüge des Bodenteils bringen den Vorteil mit sich, dass der gesamte Wärmeübertrager wirtschaftlicher und kostengünstiger hergestellt werden kann, da die Durchzüge in einem Verfahrensschritt und mit einem Werkzeug, einem entsprechend ausgebildeten Stempel, hergestellt werden können. Das Stanzen bzw. Stanzwerkzeuge wie beim Stand der Technik können entfallen.

Besonders vorteilhaft ist der erfindungsgemäße Wärmeübertrager als Wärmeübertrager für Kraftfahrzeuge, insbesondere als Kühlmittelkühler einer Brennkraftmaschine einsetzbar. Dabei kommen vorzugsweise ein- oder mehrreihige Flachrohr-Kühler zum Einsatz, welche eine hohe Wärmeübertragungsleistung erbringen.

Ein Ausführungsbeispiel der Erfindung ist in der Zeichnung dargestellt und wird im Folgenden näher beschrieben. Es zeigen
- Fig. 1: einen Längsschnitt gemäß der Ebene I-I in Fig. 2 durch ein Bodenteil eines Sammelkastens für einen Wärmeübertrager,
- Fig. 2: eine Draufsicht auf das Bodenteil,
- Fig. 3: einen Querschnitt durch das Bodenteil gemäß Ebene III-III in Fig. 2,
- Fig. 4: Durchzüge im Bodenteil als Einzelheit X aus Fig. 1,
- Fig. 4a: eine Einzelheit X1 aus Fig. 4, nochmals vergrößert,
- Fig. 5: einen Durchzug als Einzelheit Y aus Fig. 2 und
- Fig. 5a: eine Einzelheit Y1 aus Fig. 5, nochmals vergrößert.

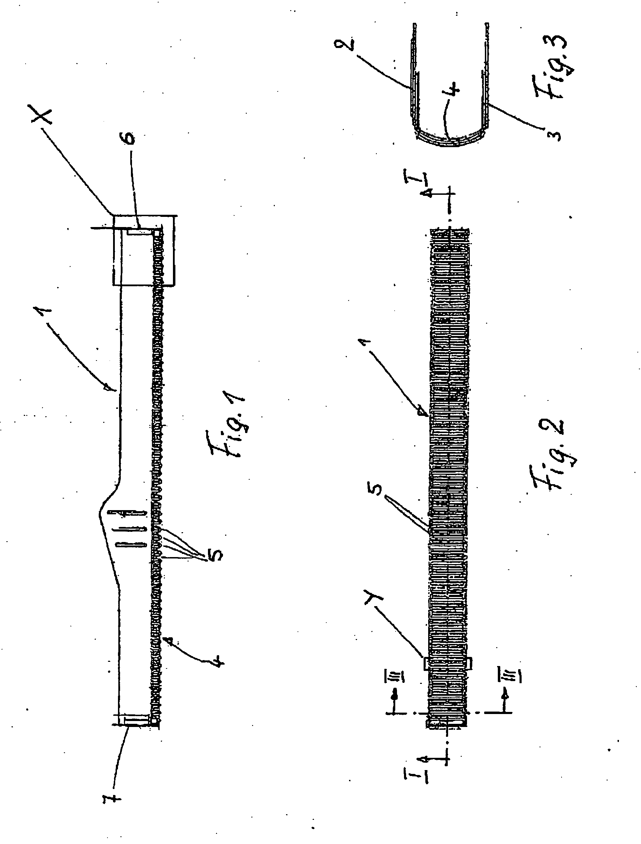

**Fig. 1** zeigt einen Längsschnitt gemäß der Ebene I-I in Fig. 2 durch ein Bodenteil 1. **Fig. 2** zeigt eine Draufsicht auf das Bodenteil 1, und **Fig. 3** zeigt einen Querschnitt entsprechend der Schnittebene III-III in Fig. 2 in vergrößerter Darstellung. Das Bodenteil 1 weist - wie in Fig. 3 erkennbar - einen etwa U-förmigen Querschnitt auf, welcher durch zwei im Wesentlichen ebene, parallel zueinander angeordnete Seitenwände 2, 3 sowie ein nach außen gewölbtes Mittelteil 4 gebildet wird. Das Bodenteil 1 wird mit einem nicht dargestellten Deckelteil zu einem nicht dargestellten Sammelkasten eines ebenfalls nicht dargestellten Wärmeübertragers ergänzt. Das Bodenteil 1 ist vorzugsweise aus einem Aluminiumblech durch Umformung hergestellt. In dem gewölbten Mittelteil 4 sind eine Vielzahl von sich über die gesamte Breite erstreckenden Durchzügen 5 zur Aufnahme von nicht dargestellten Flachrohren angeordnet. Das Bodenteil 1 wird durch Stirnwände 6, 7 abgeschlossen und bildet somit einen nach oben offenen Kasten. Einzelheiten X in Fig. 1 und Y in Fig. 2 sind in den nachfolgenden Figuren dargestellt.

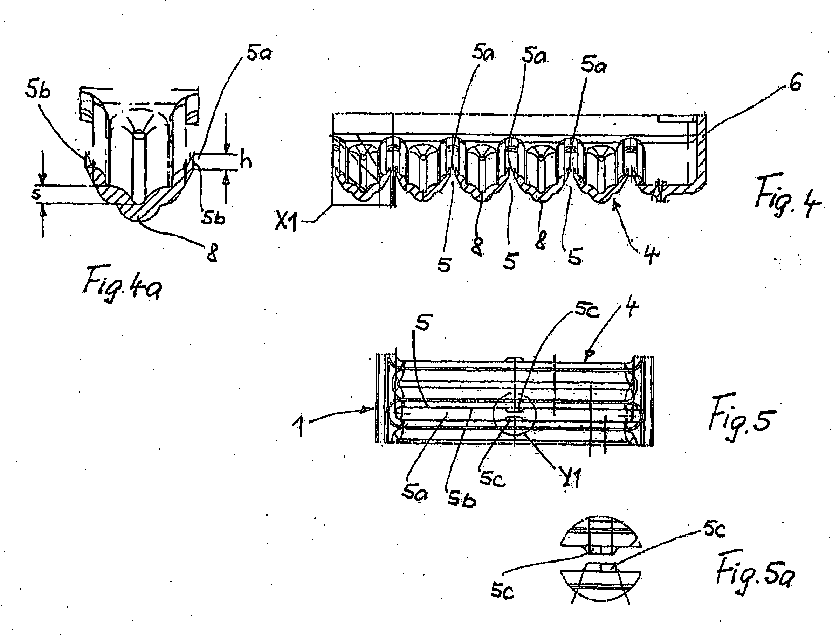

**Fig. 4** zeigt die Einzelheit X aus Fig. 1 mit den Durchzügen 5 im Mittelteil 4 in einer vergrößerten Schnittdarstellung. Die Durchzüge 5 bilden Schlitze 5a, in welche nicht dargestellte Flachrohre eingeführt werden. Das Mittelteil 4 weist zwischen benachbarten Durchzügen 5 ein etwa V-förmiges Profil mit einer nach außen geprägten, parallel zu den Durchzügen 5 verlaufenden Sicke 8 auf, welche eine Versteifung des Mittelteiles 4 bewirkt. Zwischen benachbarten Sicken 8 ergibt sich somit ein trichterförmiger Übergangsbereich zu den Schlitzen 5a.

**Fig. 4a** zeigt die Einzelheit X1 aus Fig. 4, d. h. einen Bereich mit Sicke 8 zwischen benachbarten Durchzügen 5 bzw. Schlitzen 5a. Der Schlitz 5a wird durch eine umlaufende Fläche 5b gebildet, welche eine Höhe h aufweist. Die Wandstärke des Blechmaterials, aus dem das Bodenteil 1 bzw. Mittelteil 4 hergestellt wird, ist mit s bezeichnet. Die Höhe h des Schlitzes 5a, auch als Kragen 5a bezeichnet, liegt zwischen 70 bis 90 % der Materialwandstärke s, vorzugsweise bei 80 bis 85 %.

**Fig. 5** zeigt die Einzelheit Y aus Fig. 2, d. h. eine Draufsicht auf einen Durchzug 5 mit Schlitz bzw. Kragen 5a, welcher durch die umlaufende Kragen- oder Anlagefläche 5b gebildet wird. Im mittleren Bereich des Durchzuges 5 sind zwei sich gegenüberliegende, etwa trapezförmig ausgebildeten Nasen oder Vorsprünge 5c angeordnet, welche eine Verengung des Querschnittes des Kragens 5a im mittleren Bereich bewirken. Die Nasen 5c entsprechen in ihrer Lage und Form nicht dargestellten Längssicken in den ebenfalls nicht dargestellten Flachrohren, welche mit ihren Rohrenden in die Durchzüge 5 bzw. Kragen 5a eingesetzt werden. Die Kontur der Kragen 5a, gebildet durch die umlaufende Kragenfläche 5b einschließlich der Nasen 5c, entspricht der Kontur der Flachrohre mit Längssicke, kurz Sickenrohre genannt. Die Darstellung lässt erkennen, dass sich die Kragen 5a im Wesentlichen über die gesamte Breite des Mittelteiles 4 erstrecken.

**Fig. 5a** zeigt die Einzelheit Y1 aus Fig. 5, d. h. eine vergrößerte Darstellung der Nasen 5c, welche die verengten Querschnittsbereiche des Durchzuges 5 bzw. des Kragens 5a bilden. Die Nasen 5c sind - wie die Darstellung deutlich zeigt - trapezförmig ausgebildet. Diese Trapezform entspricht der Sickenform der nicht dargestellten Flachrohre, d. h. die Nasen 5c greifen maßgenau in die Längssicken ein. Die Nasen 5c weisen - wie die Figuren 4, 4a zeigen - hochgestellte Kragen auf, welche eine Anlagefläche 5b für die Flachrohre bilden und - sofern das Mittelteil 4 Iotplattiert ist - ebenfalls eine Lotplattierung aufweisen.

Die Durchzüge 5 im Bodenteil 1 respektive in dessen gewölbtem Mittelteil 4 werden nach dem in Folgenden beschriebenen Verfahren hergestellt: Das Bodenteil 1 wird mit seinem nach außen gewölbten Mittelteil auf eine ebenfalls nach außen gewölbte, nicht dargestellte Matrize aufgesetzt, welche an den für die Durchzüge vorgesehenen Stellen mit Öffnungen und einer entsprechenden Formgebung versehen ist. Von der der Matrize abgewandten Seite dringen nicht dargestellte Schneidstempel in das Material des Mittelteils ein, reißen das Material auf und drücken es gegen die Form der Matrize, wobei eine Abstreckung des verformten Materials in Richtung der Stempelbewegung erfolgt. Der Stempel weist eine Schneidkante auf, welche vorzugsweise derart gekrümmt ist, dass zunächst die äußeren Enden der Stempelschneide in das Material des Mittelteils 4 eintauchen, sodass der Reißvorgang von außen nach innen erfolgt. Anschließend an die Schneide dringt ein der Kontur des einzusetzenden Flachrohres entsprechender Schaft des Stempels in das Material ein und formt die oben erwähnten Kragen 5a über den gesamten Umfang des Durchzuges 5 aus. Somit weisen auch die in Fig. 5 dargestellten Nasen 5c Kragen 5a mit Anlagefläche 5b (vgl. Fig. 4, 4a) auf. Die in Fig. 5 dargestellte Querschnittsform mit einer Verengung im mittleren Bereich wird dadurch ermöglicht, dass an dem nicht dargestellten Stempel Längssicken eingeformt sind. Beim Eindringen des Stempels werden die entsprechenden Bereiche des Bodenmaterials somit nicht nach außen gedrückt, sondern lediglich abgestreckt. Die Durchzüge 5 einschließlich Kragen 5a können somit in einem Verfahrensschritt und mit einem Werkzeug, einem Reißwerkzeug, hergestellt werden. Materialabfälle entstehen bei dem Reißvorgang nicht, da der aus dem Stand der Technik bekannte Vorgang des Lochstanzens entfällt.

Das Bodenteil 1, insbesondere das Mittelteil 4 weist vorzugsweise auf seiner Außen-, d. h. seiner gewölbten Seite eine Lotplattierung auf, welche beim Reißvorgang ebenfalls aufgerissen, jedoch gleichzeitig mit in Richtung der Stempelbewegung abgestreckt wird. Insofern befindet sich im Bereich des Kragens 5 bzw. der Anlagefläche 5b (vgl. Fig. 4a) eine Lotplattierung, welche beim Lötprozess als Lotangebot zur Verfügung steht. Der zwischen Flachrohr und Kragen 5a bestehende Lotspalt wird somit hinreichend mit Lot benetzt, sodass eine feste und fluiddichte Verlötung erzielt wird. Dies gilt für den gesamten Umfang, also auch für den Bereich der in den Flachrohren angeordneten Längssicken, in welche die Nasen 5c eingreifen.

## Patentansprüche

1. Verfahren zur Herstellung von Öffnungen (5) in einem Bodenteil (1) eines Sammelkastens eines Wärmeübertragers, wobei die Öffnungen (5) zur Aufnahme von Flachrohren mit Sicken dienen und den Sicken entsprechende, verengte Bereiche aufweisen und wobei die Öffnungen (5) durch Umformung des Bodenteiles (1) hergestellt sind, **dadurch gekennzeichnet, dass** die Umformung durch Reißen ohne Stanzen erfolgt.

2. Verfahren nach Anspruch 1, **dadurch gekennzeichnet, dass** der gesamte Umfang der Öffnungen (5, 5a) einschließlich der verengten bereiche (5c) durch Reißen hergestellt wird.

3. Bodenteil (1) eines Sammelkastens eines Wärmeübertragers, hergestellt nach dem Verfahren gemäß Anspruch 1 oder 2, **dadurch gekennzeichnet, dass** die Öffnungen als Durchzüge (5, 5a) ausgebildet sind und Materialabstreckungen aufweisen, welche umlaufende Kragen (5a, 5b) bilden.

4. Bogenteil nach Anspruch 3, **dadurch gekennzeichnet, dass** die Kragen (5a) Anlageflächen (5b) für die Flachrohre bildern.

5. Bogenteil nach Anspruch 3 oder 4, **dadurch gekennzeichnet, dass** das Bodenteil (1) aus einem lotptatlierten Werkstoff, insbesondere einer lotplattierten Aluminiumlegierung besteht und dass die Lotplattierung die Kragen (5a, 5b) zumindest teilweise bedeckt.

6. Bodenteil nach Anspruch 3, 4 oder 5, **dadurch gekennzeichnet, dass** das Bodenteil (1) eine Wandstärke (s) und die Kragen (5a) eine Höhe h aufweisen und dass die Höhe (h) etwa 70 bis 90 %, vorzugsweise 80 bis 85 % der Bodenwandstärke (s) beträgt.

7. Bodenteil nach einem der Ansprüche 3 bis 6, **dadurch gekennzeichnet, dass** das Bodenteil (1) einen etwa U-förmigen Querschnitt- mit zwei Schenkeln (2, 3) und einem Mittelteil (4) aufweist, in welchem die Durchzüge (5) angeordnet sind.

8. Bodenteil nach Anspruch 7, **dadurch gekennzeichnet, dass** das Mittelteil (4) im Bezug auf den Sammelkasten nach außen gewölbt ist.

9. Bodenteil nach einem der Ansprüche 3 bis 8; **dadurch gekennzeichnet, dass** die verengten Bereiche als vorzugsweise trapezförmige Nasen (5c) ausgebindet sind.

10. Warmeübertrager mit Flachrohren mit mindestens einer Längssicke und mit mindestens einem, Durchzüge (5) aufweisen Bodenteil. (1) eines Sammelkasfens, **dadurch gekennzeichnet, dass** das Bodenteil (1) nach einem der Ansprüche 3 bis 9 ausgebildet ist.

11. Wärmeübertrager nach Anspruch 10, **dadurch gekennzeichnet, dass** der Wärmeüberträger als gelöteter Ganzaluminiumwärmeübertrager ausgebildet ist.

12. Wärmeübertrager nach Anspruch 10 oder 11, **dadurch gekennzeichnet, dass** der Wärmeübertrager als Wärmeübertrager für Kraftfahrzeuge, insbesondere als Kühlmittelkühler zur Kühlung einer Brennkraftmaschine ausgebildet ist.

## Claims

1. A method for creating openings (5) in a base part (1) of a header box of a heat exchanger, the openings (5) being used to receive flat tubes which have corrugations and comprising constricted regions which correspond the corrugations, and the openings (5) being created by forming the base part (1), **characterized in that** the forming is carried out by tearing without stamping.

2. The method according to claim 1, **characterized in that** the entire scope of openings (5, 5a), including the constricted regions (5c), is created by tearing.

3. A base part (1) of a header box of a heat exchanger, produced by the method according to claim 1 or 2, **characterized in that** the openings are designed as passages (5, 5a) and have material extensions which form peripheral collars (5a, 5b).

4. The base part according to claim 3, **characterized in that** the collars (5a) form contact surfaces (5b) for the flat tubes.

5. The base part according to claim 3 or 4, **characterized in that** the base part (1) is produced from a brazing material, in particular a brazing aluminum alloy, and the brazing cladding covers the collars (5a, 5b) at least partially.

6. The base part according to claim 3, 4, or 5, **characterized in that** the base part (1) has a wall thickness (s) and the collar (5a) has a height h, and the height (h) is approximately 70 to 90%, preferably 80 to 85% of the base wall thickness (s).

7. A base part according to any one of claims 3 to 6, **characterized in that** the base part (1) has an approximately U-shaped cross-section having two limbs (2, 3) and a center part (4) in which the passages (5) are provided.

8. The base part according to claim 7, **characterized in that** the center part (4) is outwardly curved in relation to the header box.

9. A base part according to any one of claims 3 to 8, **characterized in that** the constricted regions are designed as preferably trapezoidal lugs (5c).

10. A heat exchanger comprising flat tubes having at least one longitudinal corrugation and at least one base part (1) of a header box comprising passages (5), **characterized in that** the base (1) is designed according to any one of claims 3 to 9.

11. The heat exchanger according to claim 10, **characterized in that** the heat exchanger is designed as a brazed solid aluminum heat exchanger.

12. The heat exchanger according to claim 10 or 11, **characterized in that** the heat exchanger is designed as a heat exchanger for motor vehicles, in particular as a coolant radiator for cooling an internal combustion engine.

## Revendications

1. Procédé de fabrication d'ouvertures (5) dans une partie (1) formant le fond d'un banc collecteur d'un échangeur de chaleur, où les ouvertures (5) servent au logement de tubes plats comportant des moulures et présentent des zones rétrécies correspondant aux moulures, et où les ouvertures (5) sont fabriquées par transformation de la partie (1) formant le fond, **caractérisé en ce que** la transformation intervient par rupture, sans poinçonnage.

2. Procédé selon la revendication 1, **caractérisé en ce que** la circonférence totale des ouvertures (5, 5a), y compris des zones rétrécies (5c), est réalisée par rupture.

3. Partie (1) formant le fond d'un bac collecteur d'un échangeur de chaleur, fabriquée selon le procédé conformément à la revendication 1 ou 2 et **caractérisée en ce que** les ouvertures sont configurées comme des passages (5, 5a) et présentent des diminutions d'épaisseur de matériau qui forment des collerettes circulaires (5a, 5b).

4. Partie formant le fond selon la revendication 3, **caractérisée en ce que** les collerettes (5a) forment des surfaces d'appui (5b) pour les tubes plats.

5. Partie formant le fond selon la revendication 3 ou 4, **caractérisée en ce que** la partie (1) formant le fond se compose d'un matériau plaqué par brasage, en particulier d'un alliage d'aluminium plaqué par brasage, et **en ce que** le placage d'un métal d'apport recouvre au moins partiellement les collerettes (5a, 5b).

6. Partie formant le fond selon la revendication 3, 4 ou 5, **caractérisée en ce que** la partie (1) formant le fond présente une épaisseur de paroi (s), les collerettes (5a) présentant une hauteur (h), et **en ce que** la hauteur (h) mesure à peu près entre 70 % et 90 %, de préférence entre 80 % et 85 % par rapport à l'épaisseur de paroi (s) du fond.

7. Partie formant le fond selon l'une quelconque des revendications 3 à 6, **caractérisée en ce que** la partie (1) formant le fond présente une section à peu près en forme de U comportant deux branches (2, 3), et une partie centrale (4) dans laquelle sont disposés les passages (5).

8. Partie formant le fond selon la revendication 7, **caractérisée en ce que** la partie centrale (4) est bombée vers l'extérieur par rapport au bac collecteur.

9. Partie formant le fond selon l'une quelconque des revendications 3 à 8, **caractérisée en ce que** les zones rétrécies sont configurées de préférence comme des parties saillantes (5c) en forme de trapèze.

10. Echangeur de chaleur à tubes plats comportant au moins une moulure longitudinale et au moins une partie (1) formant le fond d'un bac collecteur et présentant des passages (5),
**caractérisé en ce que** la partie (1) formant le fond est configurée selon l'une quelconque des revendications 3 à 9.

11. Echangeur de chaleur selon la revendication 10, **caractérisé en ce que** l'échangeur de chaleur est conçu comme un échangeur de chaleur brasé, tout en aluminum.

12. Echangeur de chaleur selon la revendication 10 ou 11, **caractérisé en ce que** l'échangeur de chaleur est conçu comme un échangeur de chaleur pour des véhicules automobiles, en particulier comme une refroidisseur à liquide de refroidissement servant au refroidissement d'un moteur à combustion interne.
